(19) Europäisches Patentamt
European Patent Office
Office européen des brevets

(11) EP 0 540 370 B1

(12) **EUROPEAN PATENT SPECIFICATION**

(45) Date of publication and mention of the grant of the patent:
**05.03.1997 Bulletin 1997/10**

(51) Int Cl.[6]: **C08K 3/24**

(21) Application number: **92310035.8**

(22) Date of filing: **02.11.1992**

(54) **Crystalline thermoplastic resin composition**

Kristalline thermoplastische Harzzusammensetzung

Composition de résine thermoplastique cristalline

(84) Designated Contracting States:
**DE**

(30) Priority: **01.11.1991 JP 287549/91**

(43) Date of publication of application:
**05.05.1993 Bulletin 1993/18**

(73) Proprietor: **POLYPLASTICS CO. LTD.**
**Chuo-Ku Osaka-shi Osaka 541 (JP)**

(72) Inventors:
- **Mitsuuchi, Masamichi**
  **Shizuoka (JP)**
- **Minamisawa, Tsuyoshi**
  **Shizuoka (JP)**
- **Kakizaki, Hideo**
  **Shizuoka (JP)**

(74) Representative: **Tebbit, Antony Hugh Edward**
**HYDE, HEIDE & O'DONNELL**
**10-12 Priests Bridge**
**London SW15 5JE (GB)**

(56) References cited:
**EP-A- 0 319 205** **EP-A- 0 462 298**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

[Field of Industrial Application)

This invention relates to a crystalline thermoplastic resin composition containing potassium titanate.

[Background of the Invention)

Crystalline thermoplastic polyester resins such as polyalkylene terephthalate resins, which are excellent in mechanical and electrical properties and other physical and chemical characteristics, have been used as engineering plastics for wide purposes, for example, automobiles, and electrical and electronic appliances.

In the fields where a high rigidity, a high mechanical strength and a high heat resistance are required, fibrous fillers such as glass fibre or carbon fibre or flaky or granular fillers such as glass flakes, glass beads, mica or talc are frequently added to these crystalline thermoplastic polyester resins to thereby improve the above-mentioned characteristics.

The addition of potassium titanate whiskers, among these fillers, has particularly attracted public attention in recent years, since it can not only elevate the strength, rigidity and heat resistance but also improve the sliding properties while scarcely causing problems accompanying the addition of common fibrous fillers, namely, an increase in the moulding anisotropy or the worsening of the surface conditions of moulded articles or those accompanying the addition of flaky or granular fillers, namely, a decrease in the strength or embrittlement.

However potassium titanate whiskers do not have very good miscibility with thermoplastic resins commonly employed in ordinary processing, such as polyalkylene terephthalate resins in the form of pellets and in workability because of the extremely low bulk specific gravity thereof.

In practice, potassium titanate whiskers are either mixed with a thermoplastic resin in a mixer such as a twin-cylinder mixer or a ribbon mixer, or separately fed into an extruder from a line different from that for the thermoplastic resin, and then melt kneaded. In the mixing step, segregation sometimes occurs. In the step of feeding into the extruder, phase separation, bridging or clogging frequently occurs, thus causing processing troubles such as surging or strand breakage. As a result, homogeneous resin compositions can be hardly obtained and, in its turn, the final moulded articles have poor qualities in some cases. In addition, there are some problems in productivity. For example, a low extrusion output per unit time and in environmental hygiene, for example, scattering of fine particles, which should be solved.

[Summary of the Invention)

The present inventors have conducted extensive studies in order to solve the above-mentioned problems encountered in the preparation of crystalline thermoplastic resin compositions containing potassium titanate whiskers without deteriorating the excellent mechanical properties of these resins. As a result, they have successfully found out that a resin composition having excellent properties and being free from the troubles of bridging and clogging in the kneading step can be obtained by adding granular potassium titanate of a bulk specific gravity falling within a specific range, thus completing the present invention.

According to, the present invention, there is provided a crystalline thermoplastic resin composition comprising 40 to 97% by weight of a crystalline thermoplastic resin and 3 to 60% by weight of granular potassium titanate having a bulk specific gravity of 0.20 to 0.80 g/cm$^3$.

[Detailed Description of the Invention)

Now each of the components of the composition according to the present invention will be described in greater detail.

The composition of the present invention is characterised in that granular potassium titanate is added to a crystalline thermoplastic resin.

In general, potassium titanate whiskers are involved in the category of high-strength single-crystal fibres and represented by the formula $K_2O.nTiO_2$ or $K_20.nTiO2.½H_20$. In particular, whiskers comprising potassium titanate wherein n = 6 are preferable. Potassium titanate whiskers usually have an average fibre diameter of from 0.05 to 2 μm and an average fibre length of from 1 to 500 μm.

The granular potassium titanate to be used in the present invention may be obtained by formulating the above-mentioned potassium titanate whiskers, prepared by, for example, the baking method, the fusion method, the hydrothermal method, the flux method or the annealing method, into granules having a bulk specific gravity of 0.20 to 0.80 g/cm$^3$, preferably with the use of a binder.

The term "bulk specific gravity" is used herein to denote a value determined by screening potassium titanate

whiskers with a 20-mesh sieve, transferring approximately 5 g of the whiskers passing through the sieve into a graduated cylinder (100 $cm^3$), tapping these whiskers 50 times in a tap denser and then calculating in accordance with the following equation:

$$\text{bulk specific gravity} = \frac{\text{sample amount (g)}}{\text{final amount } \left(cm^3\right)}$$

The binder may be arbitrarily selected without restriction, so long as potassium titanate whiskers can be bonded to each other thereby and so long as the binder does not exert any undesirable effect on the matrix resin. Examples of the usable binder include liquids such as water, olefin addition polymers such as polyvinyl acetate, polyacrylate, polyvinyl-pyrrolidone, (acid-modified) polyethylene and (acid-modified) polypropylene and copolymers thereof, polyaddition reaction products such as polyurethane and polyurea, condensation polymers such as (un)saturated polyester, nylon and epoxy resins, ring-opening polymers such as nylon 6 and polyethyloxazoline and addition condensates such as urea/formalin resin. Among these binders, a thermoplastic resin or an epoxy resin is preferably used.

Granular potassium titanate may be formed by using these binders by any suitable method. For example, potassium titanate whiskers may be added to a solution of a binder in an appropriate organic solvent and the mixture fluid-agitated by using a mixer, and dried to thereby give the desired granular potassium titanate.

To sum up, the granular potassium titanate as specified in the present invention is one which may be obtained by granulating potassium titanate whiskers, preferably having an average fibre diameter of from 0.1 to 0.7 μm and an average fibre length of from 10 to 30 μm, into granules having a diameter of from 0.2 to 3 mm and a bulk specific gravity of from 0.20 to 0.80 g/$cm^3$, preferably from 0.30 to 0.60 g/$cm^3$.

It is desirable that the granular potassium titanate be treated with a binder or a surface-treating agent so as to elevate the adhesion thereof to a matrix resin and to promote homogeneous dispersion in its use. For example, a functional compound such as an epoxy compound, an isocyanate compound. a silane compound, a titanate compound or a zirconia compound may be used therefor. Such a compound may be simultaneously added during the formulation of the granular potassium titanate or during the formulation of the composition.

The granular potassium titanate thus obtained can provide a homogeneous composition while causing neither any bridging of potassium titanate in the kneading with the thermoplastic resin nor any trouble in processing, such as surging or strand cut breakage, compared with conventional powdery ones.

In the present invention, the granular potassium titanate is used in an amount of from 3 to 60% by weight per 97 to 40% by weight of the crystalline thermoplastic resin. When the content of the granular potassium titanate is smaller than 3% by weight, no desired effects can be achieved. On the other hand, a granular potassium titanate content exceeding 60% by weight is undesirable, since moulding becomes difficult in this case. The granular potassium titanate preferably is used in an amount of from 5 to 50% by weight, per 95 to 50% by weight of the crystalline thermoplastic resin. The content of the above-mentioned surface-treating functional compound to be used together with the granular potassium titanate may range from 0 to 10% by weight, preferably from 0.05 to 5% by weight, based on the granular potassium titanate.

Examples of the crystalline thermoplastic resin to be used in the present invention include polyester, polyarylene sulphide, polyacetal and polyamide resins.

Such polyester resins include those obtained by the polycondensation of a dicarboxylic acid compound with a dihydroxy compound, the polycondensation of a hydroxy carboxylic acid compound, or the polycondensation of these three components: the effects of the present invention can be achieved by using any of the homopolyester and copolyesters.

Examples of these polyester resins include polyethylene terephthalate, polybutylene terephthalate and aromatic liquid crystal polyesters.

The polyarylene sulphide resins are polymers or copolymers con,-raining at least 70% by mol of repeating units represented by the following general formula: -(Ar-S)- wherein Ar represents an aryl group. Typical examples thereof include polyphenylene sulphide containing at least 70% by mol of a repeating unit represented by the following formula:

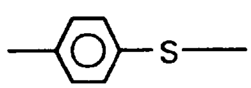

and copolymers thereof. Among these materials, those having a melt viscosity of from 10 to 20,000 P (1 to 2,000 Pas), more preferably from 100 to 5,000 P (10 to 500 Pas), when measured at a temperature of 310°C, and a shear rate of 1200/sec, are suitable.

As the polyacetal resins, any of a polyacetal homopolymer and a polyacetal copolymer, which has an oxymethylene chain as the major component of the main chain, may be used.

As the polyamide resins, those obtained by the ring-opening polymerisation of a cyclic aliphatic lactam, the condensation polymerisation of an aliphatic diamine with an aliphatic dicarboxylic acid, or an aromatic dicarboxylic acid, or the condensation polymerisation of an amino acid may be employed.

In the present invention, either one of these crystalline thermoplastic resins or a mixture comprising two or more of them may be used.

The composition according to the present invention may further contain fibrous, granular or flaky fillers. Furthermore, it may contain a crystalline thermoplastic resin, other than those of the present invention, or a non-crystalline thermoplastic resin as an auxiliary component.

Examples of the fibrous filler include inorganic fibrous materials such as fibres of glass, asbestos, carbon, alumina, zirconia, boron nitride, silicon nitride and boron fibre and fibres of metals such as stainless steel, aluminium, titanium, copper and brass.

Examples of granular fillers include carbon black, quartz powder, glass beads, glass powder, aluminium silicate, kaolin, talc, clay, diatomaceous earth, metal oxides including iron oxide, titanium oxide, zinc oxide and alumina, metal carbonates including calcium carbonate and magnesium carbonate, metal sulphates including calcium sulphate and barium sulphate, silicon carbide, silicon nitride, boron nitride and powders of various metals.

Examples of flaky fillers include mica, glass flakes and various metal foils.

The composition of the present invention may further contain known components which are commonly added to crystalline thermoplastic resins depending on the desired performance, for example, plasticizers, stabilisers such as antioxidants and UV absorbers, antistatic agents, surfactants, flame retardants, colouring agents such as dyes and pigments, slip additives for improving the flowability and the mould release characteristics of the composition, lubricating agents and crystallisation accelerators (i.e., nucleating agents), if needed.

The resin composition of the present invention can be produced by a method and with the use of an apparatus both generally employed for producing crystalline thermoplastic resins. More specifically, selection may be made from among a method wherein the necessary components are mixed together, kneaded in a single- or double-screw extruder and extruded to thereby give pellets to be moulded, a method wherein some of the components are formulated into a master patch, which is then blended and moulded, or a method wherein part of the whole of the employed polymer is ground into a fine powder in order to thoroughly mix and disperse each component, then blended and melt-extruded.

As the above description clearly show, a resin composition keeping mechanical properties thereof, having a remarkably improved productivity and a stable quality and being substantially free from the problems of environmental hygiene can be obtained by adding granular potassium titanate to a crystalline thermoplastic resin, as compared with conventional non-granulated ones.

To further illustrate the present invention in greater detail, and not by way of limitation, the following Examples will be given.

In the following Examples, the properties of the products are evaluated by the methods as specified below.

(1) Tensile strength

Measurement is made in accordance with ASTM D638.

(2) Extrudability (evaluated during the preparation of composition pellets).

A mixture of a crystalline thermoplastic resin with (granular potassium titanate is extruded on a double-screw extruder (PCM-45 manufactured by Ikegai Tekko K.K.; internal diameter: 45 mm). Then the conditions of feeding into the extruder (adhesion to the hopper and clogging), bite, and the conditions after extrusion (strand breakage and surging) are observed with the naked eye and the total conditions are evaluated in 4 ranks.

| 4 | 3 | 2 | 1 |
|---|---|---|---|
| (none) | adhesion to hopper | clogging | (serious) |
| (good) | strand beakages | surging | (poor) |

(3) Maximum extrusion output

By using the above-mentioned extruder, the maximum extrusion output (kg/hr) at which the composition can be smoothly extruded without causing any troubles such as adhesion to the hopper, clogging or strand breakage is determined.

(4) Environmental hygienic property

By using the above-mentioned extruder, the dust concentration around the extruder is measured and evaluated in the 4 ranks as specified below.

| | 4 | 3 | 2 | 1 |
|---|---|---|---|---|
| | (good) | | | (poor) |
| dust concentration (mg/$m^3$) | <0.05 | 0.05 - 1 | 0.1 - 0.3 | >0.3 |

The dust concentration is measured by using a High Volume Air Sampler HVS-500-5 (manufactured by Shibata Kagaku Kiki Kogyo K.K.).

Examples 1 to 3

Potassium titanate whiskers of 3 types (average fibre diameter: about 0.5 μm, average fibre length: about 20 μm) were formulated into potassium titanate granules. Those having bulk specific gravities of 0.20 g/$cm^3$, 0.30 g/$cm^3$ and 0.50 g/$cm^3$ are referred to respectively as A, B and C in Table 1. 20% by weight of each granular potassium titanate was mixed with a polyacetal resin (Duracon M90 [Reg. TM] manufactured by Polyplastics Co., Ltd) and fed into an extruder at a rate of 12 kg/hr. After melt-kneading at an extrusion temperature of about 200°C, a composition in the form of pellets was obtained. These pellets were formulated into test pieces by injection moulding and then the above-mentioned evaluation was effected. Table 1 summarises the results.

Example 4

Evaluation was made by the same procedure as the one described in the above Examples 1 to 3 except that a polybutylene terephthalate resin (Duranex 2000 [Reg. TM] manufactured by Polyplastics Co. Ltd) was used and the content of the granular potassium titanate B was adjusted to about 30% by weight. The extrusion temperature was about 250°C. Again, Table 1 summarises the results.

Example 5

Evaluation was made by the same procedure as the one described in the above Example 4 by using the granular potassium titanate B and a polyphenylene sulphide resin. The extrusion temperature was about 310°C. Again, Table 1 summarises the results.

Comparative Examples 1 to 3

Extrusion and evaluation were made by the same procedures as those described in the above Examples except that the granular potassium titanate was replaced by conventional nongranulated potassium titanate whiskers (bulk specific gravity: 0.15 g/$cm^3$). Table 1 shows the results.

Table 1

| | | Unit | Ex. No. 1 | Ex. No. 2 | Ex. No. 3 | Ex. No. 4 | Ex. No. 5 | Comp. Ex, No 1 | Comp. Ex, No 2 | Comp. Ex, No 3 |
|---|---|---|---|---|---|---|---|---|---|---|
| Composition | polyacetal | wt.% | 80 | 80 | 80 | | | 80 | | |
| | polybutylene terephthalate | do. | | | | 70 | | | 70 | |
| | polyphenylene sulphide | do. | | | | | 70 | | | 70 |
| | granular potassium titanate Type | do. | A | B | C | B | B | | | |
| | granular potassium titanate | | 20 | 20 | 20 | 30 | 30 | | | |
| | potassium titanate whisker | do. | | | | | | 20 | 30 | 30 |
| | (nongranulated) | do. | | | | | | 20 | 30 | 30 |
| Property | tensile strength | $kg/cm^2$ | 1030 | 1050 | 1030 | 1020 | 1720 | 1010 | 905 | 1650 |
| | | (MPa) | (101) | (103) | (101) | (100) | (169) | (99) | (89) | (162) |
| | extrudability | - | 3 | 4 | 4 | 4 | 4 | 1 | 1 | 1 |
| | maximum extrusion output | kg/hr | 30 | 30 | 30 | 20 | 20 | -° | -° | -° |
| | environmental hygienic property | - | 3 | 4 | 4 | 4 | 4 | 1 | 1 | 1 |

Since an initial test made at an extrusion output of 12 kg/hr presented problems in extrudability, the evaluation was discontinued.

## Claims

1. A crystalline thermoplastic resin composition comprising 40 to 97% by weight of a crystalline thermoplastic resin and 3 to 60% by weight of granular potassium titanate having a bulk specific gravity of 0.20 to 0.80 g/$cm^3$.

2. The crystalline thermoplastic resin composition according to Claim 1. wherein the crystalline thermoplastic resin is one or a mixture of two or more resins selected, from among polyester, polyarylene sulphide, polyacetal and polyamide resins.

## Patentansprüche

1. Kristalline, thermoplastische Harz-Zusammensetzung, umfassend 40 bis 97 Gew.-% eines kristallinen, thermoplastischen Harzes und 3 bis 60 Gew.-% körniges Kaliumtitanat einer Schüttdiche von 0,20 bis 0,80 g/$cm^3$.

2. Kristalline, thermoplastische Harz-Zusammensetzung gemäß Anspruch 1, worin das kristalline, thermoplastische Harz ein Harz oder eine Mischung von zwei oder mehreren Harzen ist, das (die) aus Polyester-, Polyarylensulfid-, Polyacetal- und Polyamidharzen ausgewählt ist (sind).

## Revendications

1. Composition de résine thermoplastique cristalline, comprenant 40 à 97 % en poids d'une résine thermoplastique cristalline et 3 à 60 % en poids de titanate de potassium granulaire ayant une masse volumique apparente de 0,2 à 0,8 g/$cm^3$.

2. Composition de résine thermoplastique cristalline selon la revendication 1, dans laquelle la résine thermoplastique cristalline est une résine ou un mélange de deux résines ou plus choisies parmi les résines polyester, sulfure de polyarylène, polyacétal et polyamide.